# EUROPÄISCHE PATENTSCHRIFT

(11) **EP 1 181 857 B1**
(45) Veröffentlichungstag und Bekanntmachung des Hinweises auf die Patenterteilung: **14.04.2004**
(21) Anmeldenummer: 01128098.9
(22) Anmeldetag: 30.07.1996
(51) Int. Cl.: A01C 15/00, A01M 7/00

(54) **Verfahren zum Steuern und/oder Regeln von landwirtschaftlichen Bearbeitungs- und/oder Verteilmaschinen**
Method for controlling and/or regulating agricultural processing and/or distributing machines
Procédé de commande et de régulation de machines agricoles de travail et/ou de distribution

(30) Priorität: 06.09.1995 DE 19532870; 31.01.1996 DE 19603426
(43) Veröffentlichungstag der Anmeldung: 27.02.2002
(62) Teilanmeldung aus: 98114443.9
(73) Patentinhaber: Amazonen-Werke H. Dreyer GmbH & Co. KG, 49205 Hasbergen (DE)
(72) Erfinder: Scheufler, Bernd, 49205 Hasbergen (DE); Kemper, Martin, 49205 Hasbergen (DE); Marquering, Johannes, 49176 Borgloh (DE)

(56) Entgegenhaltungen:
- EP-A- 0 181 308
- EP-A- 0 266 527
- EP-A- 0 570 792
- EP-A- 0 578 988
- EP-A- 0 726 024
- EP-A- 0 730 819
- WO-A-95/04450
- DE-A- 4 342 171
- DE-A- 4 423 083
- US-A- 5 220 876

## Beschreibung

Die Erfindung betrifft ein Verfahren gemäß des Oberbegriffes des Patentanspruches 1.

In der Landwirtschaft sind verschiedene Verfahren zum Steuern und/oder Regeln von landwirtschaftlichen Bearbeitungsund/oder Verteilmaschinen bekannt, die sich zur momentanen Positionsermittlung der Maschine auf dem Feld auf das sogenannte DGPS (Differential Global Position System) stützen. Bei diesem Verfahren sind Rechner vorgesehen, in welchem maschinenspezifische Daten zur Erstellung der Maschine je Standort und Fläche eingespeichert sind.

Die nicht vorveröffentlichte EP-A-730 819 zeigt ein Verfahren gemäß des Oberbegriffes des Patentanspruches 1. Bei diesen Verfahren ist ein Monitor vorgesehen, auf dem die relative Position des Fahrzeuges auf dem Feld innerhalb einer Fahrgasse angezeigt wird. Es ist in dieser Druckschrift nicht offenbart, in welcher Weise die einzelnen Bearbeitungsstreifen und die Abstände zueinander eingehalten werden.

Der Erfindung liegt die Aufgabe zugrunde, ein möglichst genaues Anschlussfahren bei der Ausbringung von Saatgut, Düngemitteln und Pflanzenschutzmitteln zu erreichen.

Diese Aufgabe wird erfindungsgemäß durch die kennzeichnenden Maßnahmen des Anspruches 1 gelöst. Infolge dieser Maßnahmen wird eine sehr genaue Bearbeitung der Fläche bzw. eine sehr genaue Verteilung des auszubringenden Materials an die Gegebenheiten der jeweiligen Teilflächen des Feldes erreicht. Der Rechner erkennt aufgrund des Positionsgebers (DGPS), an welcher Stelle er sich auf dem Feld befindet. In Abhängigkeit der eingespeicherten maschinenspezifischen Daten zur Einstellung der Maschine je Standort und Fläche wird ein individuelle Bearbeitung der Fläche bzw. Verteilung des Materials auf der Fläche erreicht.

Mittels einer geeigneten Anzeigevorrichtung werden das Einhalten der vorgesehen Fahrspur zum Einhalten der Fahrabstände zu der vorhergehenden Fahrspur angezeigt bzw. die Fahrspur und/oder die Fahrspuren angezeigt. Dieses ist vor allem beim Befahren von Flächen, bei denen Orientierungshilfen, wie beispielsweise Fahrgassen fehlen, wie dieses beispielsweise beim Düngen auf Grünland der Fall ist, für das genaue Anschlussfahren von großer Bedeutung.

Durch das Anzeigen des korrekten Einhalten des Fahrweges und Abweichen vom Fahrweg auf der Anzeigevorrichtung kann der Fahrer anhand der Darstellung auf dem Monitor den Absatnd zu der vorhergehenden Fahrspur genau einhalten. Eine einfache Darstellung des Einhaltens bzw. des Abweichens des vorgesehenen Fahrweges wird durch das Merkmal des Patentanspruches 2 erreicht.

Um eine möglichst genaue und exakte Anpassung der Ausbringmengen zu erreichen, ist vorgesehen, dass der Rechner in Abhängigkeit der aktuellen Fahrgeschwindigkeit eine Vorausberechnung durchführt, zu welchem Zeitpunkt die Verteilmaschine tatsächlich an dem Standort sich befindet bzw. diesen erreicht hat, an dem die jeweils dort festgelegte Menge Material ausgebracht werden soll.

Des weiteren ist erfindungsgemäß vorgesehen, dass sich das Arbeitsgerät automatisch wieder einschaltet, wenn die Fahrgasse oder die geplante Fahrspur für eine Arbeitsunterbrechung - z.B. zum Nachfüllen des Vorratsbehälters o.ä. - verlassen wird und für die Weiterarbeit wieder angefahren wird. Somit wird also die Arbeit oder das Ausbringen von Material automatisch an der richtigen Stelle, an der die Arbeit unterbrochen worden ist, wieder fortgesetzt, ohne dass Doppel- oder Fehlbearbeitung entsteht.

Weitere Einzelheiten der Erfindung sind den übrigen Unteransprüchen, der Beispielsbeschreibung und den Zeichnungen zu entnehmen. Hierbei zeigen
- Fig.1: den Ausschnitt einer Bodenkarte eines Feldes,
- Fig.2: eine an einen Ackerschlepper angebaute als Schleuderdüngerstreuer ausgebildete Verteilmaschine in der Seitenansicht und in Prinzipdarstellung,
- Fig.3: ein Standortbestimmungssystem in Prinzipdarstellung,
- Fig.4: das Abstreuen eines Feldes mit einem Zentrifugaldüngerstreuer in Prinzipdarstellung nach der Bodenkarte gemäß Fig.1,
- Fig.5: ein weiteres Abstreuen eines Feldes in Prinzipdarstellung und
- Fig.6: den Monitor eines Bordcomputers zum Befahren eines Feldes.

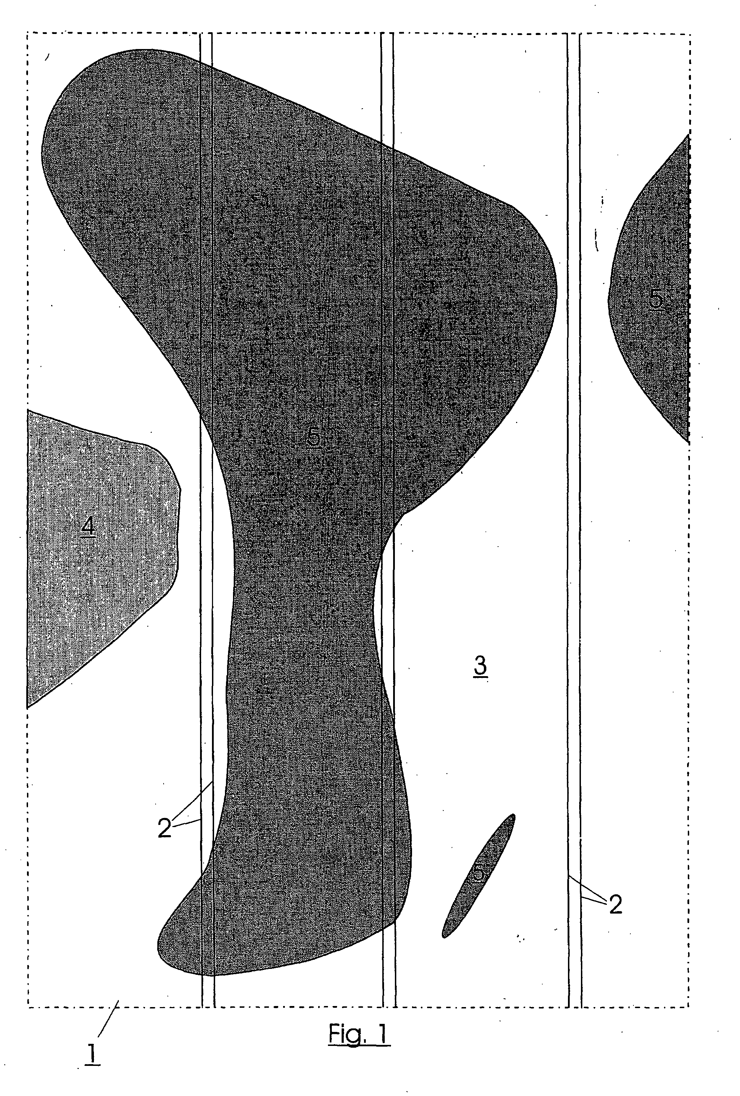

Zur bedarfsgerechten Bewirtschaftung von Flächen werden zunächst in eine Bodenkarte die spezifischen Beschaffenheiten, wie beispielsweise Nährstoffversorgung, Bodenfestigkeit und/oder Bodenart etc. eingetragen. Hierdurch kann sich beispielsweise eine Karte 1 ergeben, wie sie in Fig.1 ausschnittsweise dargestellt ist. Mit den durchzogenen Linien sind die Fahrgassen 2 dargestellt, in welchen Abständen sie angelegt und in welchen Abständen das Feld durchfahren werden soll, um so ein genaues Anschlussfahren zu gewährleisten. ;

Des weiteren sind verschiedene Teilflächen unterschiedlich schattiert dargestellt. Die weiß unterlegte Fläche 3 stellt die überwiegende Beschaffenheit des Feldes, beispielsweise die Basisbeschaffenheit dieses Feldes dar.

Die hell schattierte Fläche 4 stellt einen Bereich mit einer gegenüber der Basisfläche 3 niedrigeren Nährstoffversorgung dar, während die dunkler schattierten Flächen 5 eine höhere Nährstoffversorgung als die Basisfläche 3 aufweisen. Die in gleicher weise schattierten Flächen weisen also eine ähnliche oder gleiche Nährstoffversorgung auf.

Das gemäß Fig.1 im Teilbereich dargestellte Feld ist in einem Rechner 6 abgespeichert, wobei die Lage der Fahrgassen 2 und die Teilflächen 3, 4, 5 standort- bzw. koordinatenmäßig abgespeichert sind.

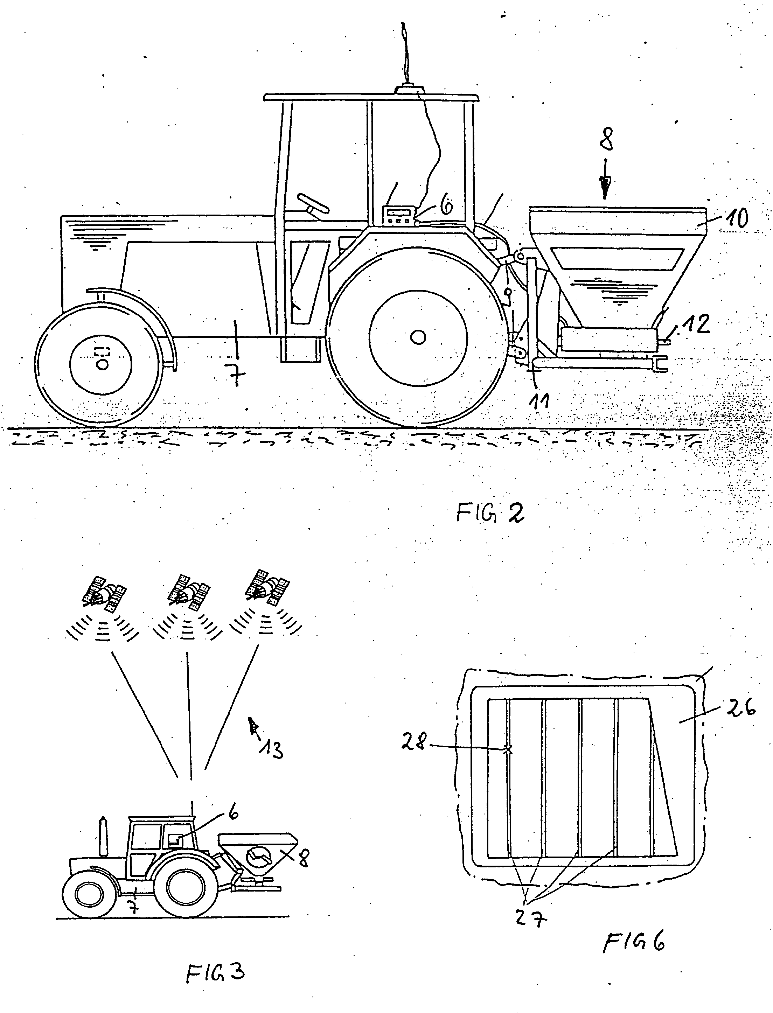

Um auf dem Feld Mineraldünger zu verteilen, ist ein Ackerschlepper 7 mit einem Zentrifugaldüngerstreuer 8 gemäß Fig.2 vorgesehen. An dem Ackerschlepper 7 ist über die Dreipunktkupplung 9 der Zentrifugaldüngerstreuer 8 angebaut. Der Zentrifugaldüngerstreuer 8 weist den Vorratsbehälter 10 und den Rahmen 11 auf. Unterhalb des Vorratsbehälters 10 sind die Schleuderscheiben 12 angeordnet, denen das sich im Vorratsbehälter 10 befindliche Material über eine Dosiereinrichtung zugeführt wird. Die jeder Schleuderscheibe 12 zugeordnete Dosiereinrichtung ist unabhängig von der anderen einstellbar.

Auf dem Ackerschlepper 7 ist der Bordrechner 6 angeordnet. In dieser als Bordrechner 6 ausgebildeten Rechnerstation sind über geeignete Eingabevorrichtungen, wie beispielsweise eine Tastatur, eine Chipkarte, welche über einen auf dem Hof vorhandenen Rechner mit entsprechenden Daten versorgt ist, die Daten über das Feld sowie der Verteilmaschine einzugeben und zu speichern. So sind in dieser Rechnerstation die Bodenkarte, die Verteilung des Materials und die Einstellung des Düngerstreuers eingegeben, wie sie von dem Rechner auf dem Hof entsprechend eines Programms berechnet worden sind.

Des weiteren ist die Rechnerstation 2 mit einem GPS-System oder einem DGPS-System (Digital Global Position System) 13 ausgestattet. Dieses System 13 arbeitet sattelitengestützt, so dass der aktuelle Standort des Schleppers 7 bzw. der Verteilmaschine 7 auf dem Acker entsprechend genau zu bestimmen ist. Anhand dieser standortermittelten Daten wird die Verteilmaschine 8 entsprechend der in dem Rechner eingegebenen Bodenkarte 1 und Daten gesteuert.

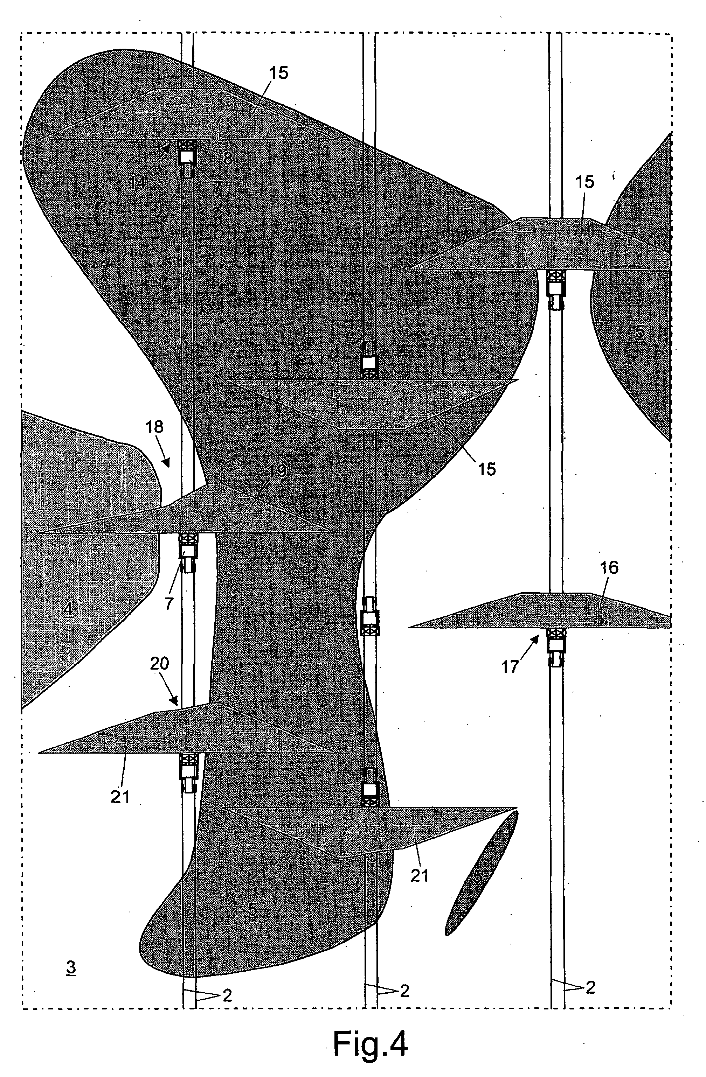

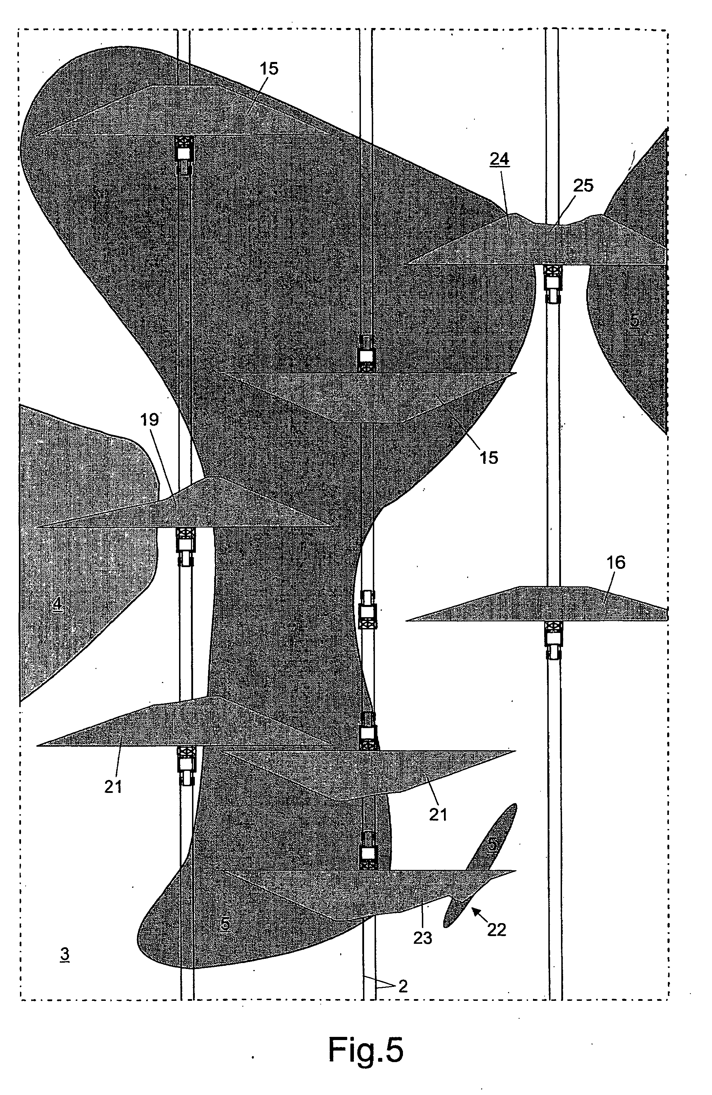

Dieses soll anhand der Bodenkarten gemäß Fig.4 und 5 näher erläutert werden.

Wenn der Schlepper 7 mit der Verteilmaschine 8 sich an der Stelle 14 befindet, wird der Dünger in gleichmäßiger Verteilung, wie dieses durch das Streubild (Streugutverteilung) 15 dargestellt ist, ausgebracht, weil über die gesamte Verteil- und Arbeitsbreite eine gleiche Nährstoffversorgung herrscht. Der Schlepper 7 mit der Verteilmaschine 8 befindet sich in dem Bereich 5, in welchem der Boden unterversorgt ist. Dieses bedeutet also, dass im Vergleich zu dem Bereich 3, welcher weiß unterlegt ist, mehr Dünger ausgebracht wird, wie dieses ein Vergleich mit dem Streubild 16 zu sehen ist. Die Verteilmaschine 8, die sich an der Stelle 17 in einem Bereich der Basisversorgung befindet, verteilt den Dünger wie es in dem Streubild 16 dargestellt ist.

Wenn der Schlepper 7 mit der Verteilmaschine 8 in den Bereich 18 kommt, wird der Dünger gemäß der Verteilung, wie sie in dem Streubild 19 dargestellt ist, verteilt. Über den Bereich 5, der eine Unterversorgung aufweist, wird mehr Dünger ausgebracht, wie in dem Bereich 4, der eine Überversorgung aufweist. Wenn der Schleuderdüngerstreuer 8 sich an der Stelle 20 befindet, wird in dem Flächenbereich 5, in dem ein Unterversorgung herrscht, mehr Dünger ausgebracht, als in dem Bereich 3, der eine Basisversorgung aufweist. Der Dünger wird also gemäß der Verteilung, wie sie in dem Streubild 21 dargestellt ist, verteilt. Der Übergang von der einen Verteilcharakteristik zu der anderen, d.h. bei dem Überfahren verschiedener Nährstoffversorgungsbereiche oder dem Wechsel von einem Bereich in einem anderen erfolgt die Verteilung, wie sie in den Streubildern dargestellt ist, bzw. deren Übergang entsprechend der Vorgabe des Rechners. Hierbei kann eine stufen- oder kontinuierlich laufende Veränderung (Übergangsbereiche werden berücksichtigt) von der einen Verteilcharakteristik vorgesehen sein. Neben der Verteilcharakteristik (Streubild) kann auch der Streufächer berücksichtigt werden. Somit erfolgt die Regelung quasi nach einem dreidimensionalen Streubild.

Der Rechner 6 ermittelt über das DGPS-System 13 laufend den spezifischen Standort des Schleppers bzw. der Verteilmaschine, so dass laufend festgestellt wird, an welcher Stelle der Schlepper 6 mit der Verteilmaschine 8 auf dem Acker sich befindet und welche Nährstoffversorgung an dem jeweils aktuellen Standort herrscht. Anhand dieser Daten wird die Ausbringmenge eingestellt. Die Verteilmaschine 8 ist in der Lage rechts und links verschiedene Mengen Material auszubringen, wie dieses in den einzelnen Streubildern 15, 16, 21, die in dem Kartenausschnitt gemäß Fig.4 eingetragen ist, dargestellt ist.

Somit erfolgt ein laufendes bzw. intervallweises spezifisches Anpassen der Ausbringmenge des Düngerstreuers 8 entsprechend den überwiegenden flächenspezifischen Gegebenheiten während des Ausbringvorganges durch eine Interpretation der flächenspezifisch abgespeicherten Daten der befahrenen Fläche. Hierbei erfolgt gemäß dem Ausführungsbeispiel gemäß Fig.4 ein halbseitiges Anpassen der Ausbringmenge des Düngerstreuers 8 entsprechend den überwiegenden flächenspezifischen Gegebenheiten je halber Arbeitsbreite. Auch ist es möglich in kleineren Teilbreiten als halbe Arbeitsbreite eine Anpassung vorzunehmen, wenn die Verteilmaschine entsprechend ausgebildet ist. Es erfolgt also über den Rechner in Verbindung mit dem DGPS-System und den abgespeicherten Werten entsprechend einer Bodenbeschaffenheits- oder Nährstoffversorgungseinheit, wie sie beispielsweise in Fig.1 dargestellt ist, eine intelligente Verknüpfung der tatsächlich ausgebrachten Ausbringmenge mit der tatsächlich gegebenen Nährstoffversorgung des Bodens. Auch kann eine intelligente Anpassung der Arbeitsbreite durch entsprechendes Schalten bei Düngerstreuern und Feldspritzen mit diesem System erfolgen.

Des weiteren ist in dem Rechner 6 ein Programm abgespeichert, so dass in Abhängigkeit der aktuellen Fahrgeschwindigkeit einer Vorausberechnung durchgeführt wird, zu welchem Zeitpunkt die Verteilmaschine 8 tatsächlich an dem Standort sich befindet bzw. diesen erreicht hat, an dem die jeweils dort festgelegte Menge Material ausgebracht werden soll. Hierdurch wird die sog. Todzeit ausgeschaltet.

Des weiteren ist das in dem Rechner 6 abgespeicherte Programm derart ausgelegt, dass sich das Arbeitsgerät 8 automatisch wieder einschaltet, wenn die Fahrgasse oder die geplante Fahrspur für eine Arbeitsunterbrechung, z.B. Nachfüllen des Vorratsbehälters o.ä., verlassen wird und für die Weiterarbeit wieder angefahren wird. Hierdurch wird automatisch ein nahtloses Verteilen des Düngers erreicht. Um zu verhindern, dass innerhalb einer Arbeitsbahn der Vorratsbehälter 10 nachgefüllt werden muss, ist das Programm in dem Bordcomputer 6 derart ausgelegt, dass der Bordcomputer 6 aufgrund der Planung der Materialverteilung vorausberechnet, an welcher Stelle es sinnvoll ist, den Vorratsbehälter 10 wieder aufzufüllen. Somit werden unnötige Leerfahrten und Doppelfahrten innerhalb des Feldes vermieden.

Die Fig.5 zeigt eine weitere Steuerung der Verteilung des Düngers quer zur Fahrtrichtung des Düngerstreuers 8. Wie insbesondere die Streubilder 15, 18, 19, 21, 23 erkennen lassen, wird so eine spezifische Anpassung der Verteilung des Materials entsprechend den flächenspezifischen Gegebenheiten während des Ausbringvorganges durch die Interpretation der flächenspezifischen abgespeicherten Daten der befahrenen Fläche durchgeführt. Wie zu erkennen ist, wird an der Stelle 22, an der ebenfalls eine Unterversorgung herrscht, mehr Material gemäß des Streubildes 23 ausgebracht. Dieses ist beispielsweise dadurch möglich, dass der Aufgabepunkt des Düngers auf die Schleuderscheiben verändert wird. Auch kann dieses beispielsweise durch eine Änderung der Schaufeleinstellung welche über eine Fernbedienungseinrichtung durchgeführt wird, ermöglicht werden.

Bei der Darstellung der Düngerverteilung gemäß des Streubildes 24 erfolgt im mittleren Bereich 25 eine Reduzierung der Ausbringmenge, weil hier nur eine Basisversorgung des Bodens mit Mineraldünger erforderlich ist, während in den Flächenbereichen 5 eine höhere Düngerverteilung aufgrund der geringeren Nährstoffversorgung des Bodens erforderlich ist. Das erfindungsgemäße System kann erforderlichenfalls nicht nur das Streubild, d.h. die Düngerverteilung, berücksichtigen, sondern auch die Ausladung des Streufächers bei einem Zentrifugaldüngerstreuer.

Um auf Flächen, wie beispielsweise Grünland, auf denen keine Fahrgassen 2 oder andere Orientierungshilfen angelegt sind, ein genaues Anschlussverfahren zu ermöglichen, ist in dem Rechner 6 der vorgegebene Fahrweg eingespeichert, der auf dem Monitor 26 des Rechners 6 entsprechend den Linien 27, die beispielsweise den Fahrgassen 2 entsprechen können, dargestellt wird. Des weiteren wird auf dem Monitor 26 der jeweilige aktuelle Standort des Fahrzeuges 7 auf dem Acker angezeigt. Wenn nun angezeigt wird, wie durch das Kreuz 28 symbolisiert ist, der Schlepper sich in der vorgesehenen Fahrspur 27 befindet, wird der Schlepperfahrer dieser Spur 27 folgen. Falls nun jedoch angezeigt wird, dass der Schlepper 7 sich rechts oder links neben der Fahrgassenspur 27 befindet, so muss der Schlepperfahrer seinen Fahrweg derart korrigieren, dass er sich wieder, wie durch das Kreuz 28 dargestellt ist, in der Spur 27 befindet. Das korrekte Einhalten des Fahrwegs kann beispielsweise mit einem grünen Leuchtpunkt und das Abweichen von dem Fahrweg mit einem roten Leuchtpunkt dargestellt werden.

Das vorbeschriebene Verteilen von Material kann sowohl bei Schleuderdüngerstreuern, Feldspritzen, Sämaschinen etc. angewendet werden.

Des weiteren kann nach der Karte gemäß Fig.1 in dem Rechner abgespeichert werden, an welcher Stelle das Saatgut in welcher Tiefe im Boden durch Säschare abgelegt werden soll.

## Patentansprüche

1. Verfahren zum Steuern und /oder Regeln von landwirtschaftlichen Bearbeitungs- und/oder Verteilmaschinen, bei dem in einem Rechner maschinenspezifische Daten zur Einstellung der Maschine je Standort und Fläche eingespeichert sind, wobei anhand der in dem Rechner (6) eingegebenen Daten die Bearbeitungs- und/oder Verteilmaschine gesteuert und/oder geregelt wird, wobei ein Positionsgeber (13) zum Erzeugen von Feldkoordinatensignalen zur Angabe der relativen Position des Fahrzeuges (7,8) auf dem Feld vorgesehen ist, wobei in Abhängigkeit der aktuellen Position die Steuerung und/oder Regelung erfolgt, **dadurch gekennzeichnet, dass** mittels einer geeigneten Anzeigevorrichtung (26) das Einhalten der vorgesehenen Fahrspur (27) zum Einhalten der Fahrabstände zu der vorhergehenden Fahrspur angezeigt bzw. die Fahrspur und/oder die Fahrspuren angezeigt werden, dass an dem Rechner zur Erhöhung der Genauigkeit der GPS-Signale zusätzliche Sensoren, wie Radar, Lenkwinkelgeber oder Radsensoren (Messung der Wegstrecke) vorgesehen sind, dass auf der Anzeigevorrichtung das korrekte Einhalten des Fahrweges und das Abweichen vom Fahrweg dargestellt werden.

2. Verfahren nach Anspruch 1, dass das korrekte Einhalten des Fahrweges mit einem grünen Leuchtpunkt und das Abweichen von dem Fahrweg mit einem roten Leuchtpunkt auf einem Monitor dargestellt wird.

3. Verfahren nach Anspruch 1, **dadurch gekennzeichnet, dass** der Rechner (6) in Abhängigkeit der aktuellen Fahrgeschwindigkeit eine Vorausberechnung durchführt, zu welchen Zeitpunkt die Verteilmaschine tatsächlich an dem Standort sich befindet bzw. diesen erreicht hat, an dem jeweils die dort festgelegte Menge Material ausgebracht werden soll.

4. Verfahren nach Anspruch 1, **dadurch gekennzeichnet, dass** sich das Arbeitsgerät automatisch wieder einschaltet, wenn die Fahrgasse oder die geplante Fahrspur für eine Arbeitsunterbrechung - , z.B. Nachfüllen des Vorratsbehälters o.ä. - verlassen wird und für die Weiterarbeit wieder angefahren wird.

5. Verfahren nach einem oder mehreren der vorstehenden Ansprüche, **dadurch gekennzeichnet, dass** das Dosierorgan am Vorgewende automatisch aufgrund des Positionsgebers zum Erzeugen von Feldkoordinatensignale (GPS) in Verbindung mit den abgespeicherten Felddaten abgeschaltet wird.

6. Verfahren nach einem oder mehreren der vorstehenden Ansprüche, **dadurch gekennzeichnet, dass** der Öffnungs- und Schließvorgang des Dosierorgans eines Schleuderdüngerstreuers unter Berücksichtigung der Überlappung am Vorgewende mit der Fahrgasse entsprechenden Vorgabe in der Feldkarte durchgeführt wird.

## Claims

1. Method for controlling and/or regulating agricultural cultivating and/or distributing machines, where machine-specific data is stored in a computer for the adjustment of the machine according to location and surface, the cultivating and/or distributing machine being controlled and/or regulated by way of the data input in the computer (6), a position transmitter (13) being provided to generate field co-ordinate signals for indicating the relative position of the vehicle (7, 8) on the field, the controlling and/or regulating being effected in dependence on the actual position, **characterised in that**, by means of a suitable display device (26), the adhering to the intended lane (27) for retaining the spacings between the preceding lane and the present lane are displayed or respectively the lane and/or the lanes are displayed, **in that** additional sensors, such as radar, steering angle generators or wheel sensors (measuring the length of travel) are provided on the computer to increase the accuracy of the GPS signals, and **in that** the correct adhering to the path and the deviating from the path are represented on the display device.

2. Method according to claim 1, in that the correct adhering to the path is represented on a monitor by a green illuminated spot and the deviating from the path is represented on the monitor by a red illuminated spot.

3. Method according to claim 1, **characterised in that** the computer (6) determines, in dependence on the current travelling speed, at which moment the distributing machine is actually situated at the location or respectively has reached the location at which the respective quantity of material established for that location is to be deposited.

4. Method according to claim 1, **characterised in that** the operating tools are automatically switched on again if the tramline or the planned lane is departed from for an interruption to the operation, - for example, to replenish the hopper, amongst other things, - and is started up again for the continued operation.

5. Method according to one or more of the preceding claims, **characterised in that** the metering member is automatically switched off at the turn space on account of the position transmitter for generating field co-ordinate signals (GPS) in conjunction with the stored field data.

6. Method according to one or more of the preceding claims, **characterised in that** the opening and closing operation of the metering member of a fertiliser broadcaster is accomplished with consideration to the overlapping at the turn space with default corresponding to the tramline in the field map.

## Revendications

1. Procédé de commande et/ou de régulation de machines agricoles de traitement et/ou de distribution selon lequel un calculateur enregistre les données spécifiques à la machine pour régler celle-ci en fonction de l'emplacement où elle se trouve et de la surface et, à l'aide des données introduites dans le calculateur (6) on commande et/ou on régule la machine de traitement et/ou de distribution,
un capteur de position (13) étant prévu pour générer les signaux de coordonnées du champ pour indiquer la position relative du véhicule (7, 8) sur le champ, et
en fonction de la position actuelle, on commande et/ou on règle,
**caractérisé en ce qu'**
à l'aide d'un dispositif d'affichage approprié (26), on indique le respect de la voie de passage (27) prévue pour respecter l'intervalle par rapport à la voie de passage précédente ou la ou les voies de passage, et pour augmenter la précision des signaux GPS le calculateur comporte des capteurs supplémentaires tels qu'un radar, un capteur d'angle de braquage ou des capteurs de roue (mesure du trajet) et sur le dispositif d'affichage on affiche le respect correct de la trajectoire et la déviation par rapport à la trajectoire.

2. Procédé selon la revendication 1,
**caractérisé en ce que**
sur le moniteur le respect correct de la trajectoire est représenté par un point lumineux vert et la déviation par rapport à la trajectoire est représentée par un point lumineux rouge.

3. Procédé selon la revendication 1,
**caractérisé en ce qu'**
en fonction de la vitesse de déplacement actuelle le calculateur (6) effectue un calcul prévisionnel pour déterminer l'instant auquel le distributeur se trouvera effectivement à l'endroit où atteindra l'endroit auquel il devra distribuer la quantité de produit fixée.

4. Procédé selon la revendication 1,
**caractérisé en ce que**
l'appareil se rebranche automatiquement après avoir quitté la voie de passage ou la trace planifiée, pour une interruption de travail comme par exemple le remplissage du réservoir, et quand on revient sur cette voie pour poursuivre le travail.

5. Procédé selon l'une ou plusieurs des revendications précédentes,
**caractérisé en ce que**
l'organe de dosage sera coupé automatiquement avant le virage grâce au capteur de position qui génère les signaux de coordonnées du champ (GPS) en liaison avec les données enregistrées du champ.

6. Procédé selon l'une ou plusieurs des revendications précédentes,
**caractérisé en ce que**
l'opération d'ouverture et/ou de fermeture de l'organe de dosage d'un épandeur centrifuge d'engrais se fait en tenant compte du chevauchement au moment du retournement en prédéfinissant dans la carte du champ en fonction de la voie de circulation.
